(19) Europäisches Patentamt
European Patent Office
Office européen des brevets

(11) **EP 4 730 056 A1**

(12) **EUROPEAN PATENT APPLICATION**
published in accordance with Art. 153(4) EPC

(43) Date of publication:
**22.04.2026 Bulletin 2026/17**

(51) International Patent Classification (IPC):
**G05B 13/04** (2006.01)

(21) Application number: **23945823.5**

(52) Cooperative Patent Classification (CPC):
**G05B 11/36; G05B 13/04**

(22) Date of filing: **18.07.2023**

(86) International application number:
**PCT/JP2023/026173**

(87) International publication number:
**WO 2025/017818 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **HOKARI, Hiroaki**
  **Tokyo 100-8310 (JP)**
• **DOI, Mamoru**
  **Tokyo 100-8310 (JP)**
• **SATORI, Kuniaki**
  **Tokyo 100-8310 (JP)**

(74) Representative: **Pfenning, Meinig & Partner mbB**
**Patent- und Rechtsanwälte**
**Joachimsthaler Straße 10-12**
**10719 Berlin (DE)**

(54) **CONTROL DEVICE, CONTROL SYSTEM, AND CONTROL METHOD**

(57) An optimization unit (13) that calculates, by optimization calculation, control data including a step target value on the basis of a simulation result obtained by causing a simulator unit (21) to execute simulation, an optimal control computing unit (14) that activates a control target device (4), collects sensor data related to a controlled variable measured after the activation of the control target device (4), and calculates a manipulated variable of the control target device (4) on the basis of the collected sensor data in such a manner that the controlled variable follows the step target value calculated by the optimization unit (13), and a control unit (15) that controls the control target device (4) with the manipulated variable calculated by the optimal control computing unit (14) are included.

FIG. 2

**Description**

TECHNICAL FIELD

The present disclosure relates to a control device, a control system, and a control method that control equipment to be controlled (which will be refer to as "control target device" hereinafter) in such a manner that a controlled variable, which is a measured value aiming at a target value, reaches the target value at targeted time (which will be referred to as "target time" hereinafter).

BACKGROUND ART

Conventionally, in a system such as an air-conditioning system, there is known a technique of calculating a manipulated variable of a control target device using a technique of modern control represented by a liner-quadratic regulator (LQR) in such a manner that a controlled variable reaches a target value at target time. The technique of the modern control is a technique of following behavior of a control target device and calculating a manipulated variable of the control target device on the basis of a difference between a target value and a current value aiming at the target value, and is widely used to achieve stable control. The modern control is a technique effective to calculate a manipulated variable by which a controlled variable quickly reaches the target value while minimizing energy consumption of the control target device.

Meanwhile, as a technique of calculating an optimal control input in system control while reducing the power consumption in the entire system, for example, there is a known optimization technique represented by a genetic algorithm, in which power consumption of a device provided in the system is treated as an objective function, optimization calculation is performed to search for a decision variable that minimizes the objective function, and an optimal setting value of the device is obtained (e.g., see Patent Literature 1). The optimization technique is a technique of finding an optimal solution by adjusting variables under constraint conditions, and is a technique effective to optimize efficiency simultaneously with target achievement.

CITATION LIST

PATENT LITERATURES

Patent Literature 1: JP 2021-89089 A

SUMMARY OF INVENTION

TECHNICAL PROBLEM

In a control target device, highly efficient operation may be performed when capacity is reduced to some extent rather than performing full operation in some cases. A relationship between the capacity and the power consumption of the control target device varies depending on the control target device or an operating environment of the control target device. Thus, it is effective to use the technique of the modern control to calculate a highly efficient manipulated variable by which an amount of the energy consumption is comprehensively suppressed.

However, the modern control is based on a concept that the controlled variable only needs to reach the target value by the target time. Accordingly, in the existing technique using the technique of the modern control to control the control target device in such a manner that the controlled variable reaches the target value at the target time, there has been a problem that energy loss may occur due to the controlled variable quickly reaching the target value.

Note that, while an optimal operation schedule for achieving objectives including startup time or various setting values of the control target device can be calculated according to the optimization technique, it is difficult to precisely calculate the manipulated variable, that is, to perform continuous optimization, according to the optimization technique. Thus, according to the control with the manipulated variable calculated by the optimization technique, the control is performed over some discrete time width. As described above, even when the technique of the modern control is directly replaced with the optimization technique in the technique of controlling the control target device in such a manner that the controlled variable reaches the target value by the target time, another problem is raised.

The present disclosure has been conceived to solve the problems described above, and an object is to provide a control device capable of performing target control at target time and avoiding energy loss caused by a controlled variable reaching a target value earlier than the target time.

SOLUTION TO PROBLEM

A control device according to the present disclosure is a control device that controls a control target device to be controlled in such a manner that a controlled variable, which is a measured value aiming at a target value, reaches the target value at target time, the control device including: an optimization unit that calculates, by optimization calculation, control data including a step target value, which is the target value in a stepwise manner until the controlled variable reaches the target value, on the basis of a simulation result indicating an error between the controlled variable and the target value and power consumption obtained by causing a simulator unit, which executes simulation that simulatively reproduces operation or behavior of the control target device, to execute the simulation; an optimal control computing unit that activates the control target device, collects sensor data related to the controlled variable measured after the activation of the control target device, and calculates a manipulated variable of the control target device on the basis of the collected sensor data in such a manner that the controlled variable follows the step target value calculated by the optimization unit; and a control unit that controls the control target device with the manipulated variable calculated by the optimal control computing unit.

ADVANTAGEOUS EFFECTS OF INVENTION

According to the present disclosure, the control device can perform the target control at the target time, and can avoid the energy loss due to the controlled variable reaching the target value earlier than the target time.

BRIEF DESCRIPTION OF DRAWINGS

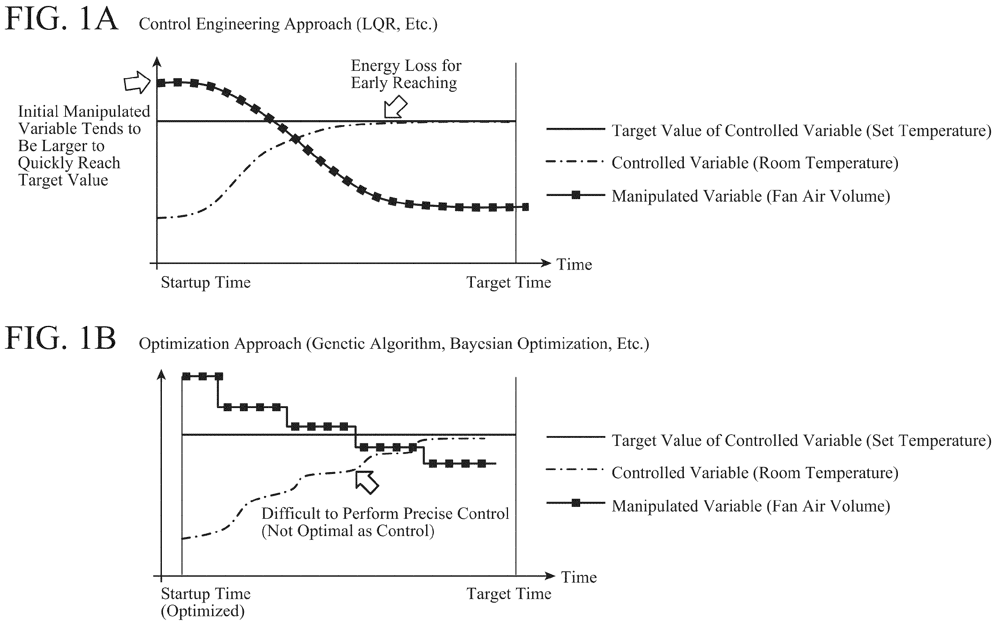

FIGs. 1A and 1B are diagrams for explaining advantages and disadvantages of modern control and an optimization technique, in which FIG. 1A is a diagram for explaining advantages and disadvantages when a fan air volume is controlled in such a manner that a room temperature reaches a temperature set as a target value at target time on the basis of a control engineering approach, in other words, on the basis of a technique of the modern control, and FIG. 1B is a diagram for explaining advantages and disadvantages when the fan air volume is controlled in such a manner that the room temperature reaches the temperature set as the target value at the target time on the basis of an optimization approach, in other words, on the basis of the optimization technique.
FIG. 2 is a diagram illustrating an exemplary configuration of a control system including a control device according to a first embodiment.

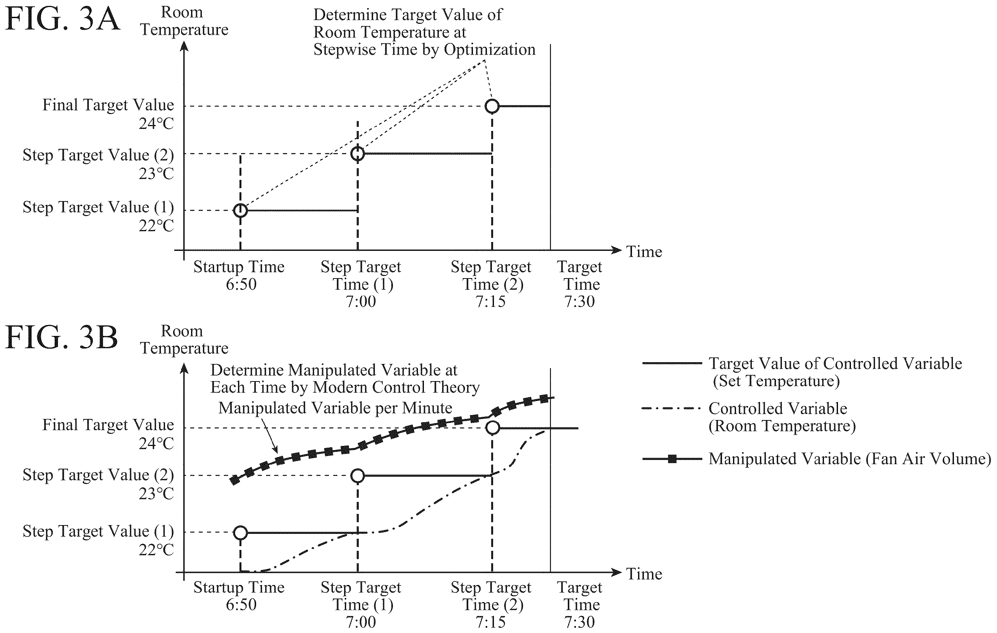

FIGs. 3A and 3B are diagrams for explaining a concept of a manipulated variable following a step target value of a room temperature at step time calculated by optimization calculation in "pre-optimization processing" and a step target value calculated by modern control in "modern control processing" and calculated by optimization calculation in the control device according to the first embodiment, in which FIG. 3A is a diagram for explaining a concept of an example of the step target value of the room temperature at the step time calculated in the "pre-optimization processing", and FIG. 3B is a diagram for explaining a concept of an example of the manipulated variable following the step target value calculated in the "modern control processing".
FIG. 4 is a flowchart for explaining operation of the control system according to the first embodiment.
FIG. 5 is a flowchart for explaining operation of the control device according to the first embodiment.
FIGs. 6A and 6B are diagrams illustrating an exemplary hardware configuration of the control device according to the first embodiment.

DESCRIPTION OF EMBODIMENTS

Hereinafter, an embodiment of the present disclosure will be described in detail with reference to the drawings.

First Embodiment

As described above, modern control and an optimization technique differ in approach, and each has advantages and disadvantages.
Here, the advantages and disadvantages of each of the modern control and the optimization technique will be described with reference to the drawings.
FIGs. 1A and 1B are diagrams for explaining the advantages and disadvantages of the modern control and the optimization technique.
Here, as an example, the advantages and disadvantages of the modern control and the optimization technique will be described using, as an example, a case of controlling a room temperature to reach a temperature set as a target value at target time in an air-conditioning system.
The air-conditioning system referred to here is assumed to be, for example, a chiller system that performs air conditioning of an air-conditioned room in a building. The chiller system is assumed to be a common chiller system, and an exemplary configuration thereof will be briefly described.
The chiller system includes air-conditioning-related equipment. The air-conditioning-related equipment includes, for example, an air cooling chiller, a cushion tank, an outdoor air conditioner, and an air handling unit (AHU).
The air cooling chiller and the outdoor air conditioner are coupled to each other by a cold water circuit.
The air cooling chiller is a cooler, and releases heat using external air.
The outdoor air conditioner controls the temperature of the cold water in the chiller system. The outdoor air conditioner includes a capacitor and a fan.
The AHU is a device that includes a filter, a damper, a fan, a humidifier, a cooler, and the like and processes air, and regulates air such as cooling or heating using cold water whose temperature is controlled by the outdoor air conditioner to supply air to the room.
The cushion tank absorbs water pressure fluctuations in the cold water circuit in the chiller system.
Note that the cold water circuit is provided with a pump for circulating cooling water. In addition, the cold water circuit is provided with a bypass valve and a valve for controlling a flow of the cooling water in the chiller system. The pump, bypass valve, and valve are also included in the air-conditioning-related equipment.
Furthermore, in the chiller system, various sensors are provided such as a sensor for measuring a temperature of water supply at each point in the cold water circuit, a sensor for measuring a differential pressure of the water supply, a sensor for measuring a flow rate of each bypass valve, a sensor for measuring a room temperature, a sensor for measuring an outside-air temperature, a sensor for measuring power consumption in the chiller system, and the like.

The air-conditioning-related equipment and the various sensors are connected to each other by a control network.

Here, it is assumed that the room temperature is aimed at reaching a target value at target time by controlling a fan air volume in the AHU. Note that, in the air-conditioning system, the air-conditioning-related equipment is equipment to be controlled (which will be referred to as "control target device" hereinafter). Hereinafter, the fan air volume in the AHU will be simply referred to as a fan air volume.

As described above, in this example, the fan air volume is a manipulated variable. Furthermore, the room temperature is controlled to approach the target value by the fan air volume being controlled. The room temperature can also be said to be a controlled variable, which is controlled by the manipulated variable (fan air volume in this case) being controlled. In the following descriptions, when the term "controlled variable" is used, such "controlled variable" indicates some measured value aimed at reaching the target value at the target time.

FIG. 1A is a diagram for explaining the advantages and disadvantages when the fan air volume is controlled in such a manner that the room temperature reaches the temperature set as the target value at the target time on the basis of a control engineering approach, in other words, on the basis of the technique of the modern control. Examples of the technique of the modern control include a liner-quadratic regulator (LQR). The LQR is a known technique, and thus detailed descriptions thereof will be omitted.

FIG. 1B is a diagram for explaining the advantages and disadvantages when the fan air volume is controlled in such a manner that the room temperature reaches the temperature set as the target value at the target time on the basis of an optimization approach, in other words, on the basis of the optimization technique. Examples of the optimization technique include a genetic algorithm and Bayesian optimization. The genetic algorithm and the Bayesian optimization are known techniques, and thus detailed descriptions thereof will be omitted.

As illustrated in FIG. 1A, for example, in the case where the fan air volume is controlled in such a manner that the room temperature reaches the temperature set as the target value at the target time on the basis of the control engineering approach, the fan air volume for allowing the room temperature to quickly reach the target value can be calculated while minimizing the amount of the energy consumption in the control target device (fan in this case).

Here, it should be noted that the control engineering approach is based on a concept that some measured value aiming at the target value, that is, the controlled variable, only needs to reach the target value at the target time, and thus, according to the control engineering approach, the initial fan air volume after the startup of the control target device in the air-conditioning system tends to be larger so as to quickly reach the target value. As a result, the room temperature reaches the target value before the target time, which may cause an energy loss therefor, that is, an energy loss of energy consumption of the fan or another control target device and an energy loss of energy required to maintain the room temperature until the target time when the room temperature reaches the target value before the target time.

According to the control engineering approach, it is difficult to perform control including optimization of the startup time of the control target device. The control engineering approach also has a problem that, when another setting value related to the manipulated variable in the control target device needs to be obtained, it is difficult to calculate an optimal setting value simultaneously with the manipulated variable. In this example, according to the control engineering approach, it is difficult to calculate, for example, a setting value of an opening degree of the bypass valve or a water temperature related to the fan air volume simultaneously with the fan air volume.

Furthermore, the control engineering approach also has a problem that, in a case of performing control in a complex system, it is difficult to calculate a manipulated variable that minimizes the amount of energy consumption.

Meanwhile, as illustrated in FIG. 1B, in the case where the fan air volume is controlled in such a manner that the room temperature reaches the temperature set as the target value at the target time on the basis of the optimization approach, an optimal operation schedule for the room temperature to reach the target value at the target time including the fan air volume and the startup time of the control target device can be calculated. According to the optimization approach, even in a complex system, an optimal manipulated variable and other setting values can be calculated.

Here, it should be noted that the optimization approach has a problem that, since it is difficult to perform continuous optimization, control is performed over some discrete time width.

For example, as illustrated in FIG. 1B, according to the optimization approach, the fan air volume is controlled for each section divided at a constant interval. As a result, the room temperature changes stepwise at the constant intervals.

As described above, according to the optimization approach, it is difficult to perform the continuous optimization of the fan air volume, in other words, to precisely calculate the fan air volume. That is, according to the optimization approach, it is difficult to precisely control the room temperature. This is because, when attempting to find an optimal solution in succession, a search space is larger and a calculation amount increases, which takes time to find the optimal solution. Such control over some discrete time width is not preferable to control the room temperature. Note that, as illustrated in FIG. 1A, the room temperature can be precisely controlled according to the control engineering approach.

In addition, the optimization approach also has a problem that, in a case of calculating an optimal operation schedule using a simulator, the accuracy of the calculated operation schedule may deteriorate when there is a difference between the simulator and the actual control target device.

As described above, the modern control has a problem that, while precise control of the room temperature, which is preferable control, can be performed, the room temperature reaches the target value before the target time and the energy loss therefor may be caused.

Meanwhile, according to the optimization technique, while control can be performed including optimization of the startup time, various setting values, or the like of the control target device, the room temperature cannot be precisely adjusted.

The present disclosure focuses on the advantages and disadvantages of the modern control and the optimization technique, and by combining the modern control and the optimization technique, it enables optimization at the startup of the control target device including optimization of the startup time and various setting values of the control target device, which has been difficult only with the modern control, and achieves target control (more specifically, precise control) at the target time and avoidance of the energy loss caused by the controlled variable reaching the target value earlier than expected.

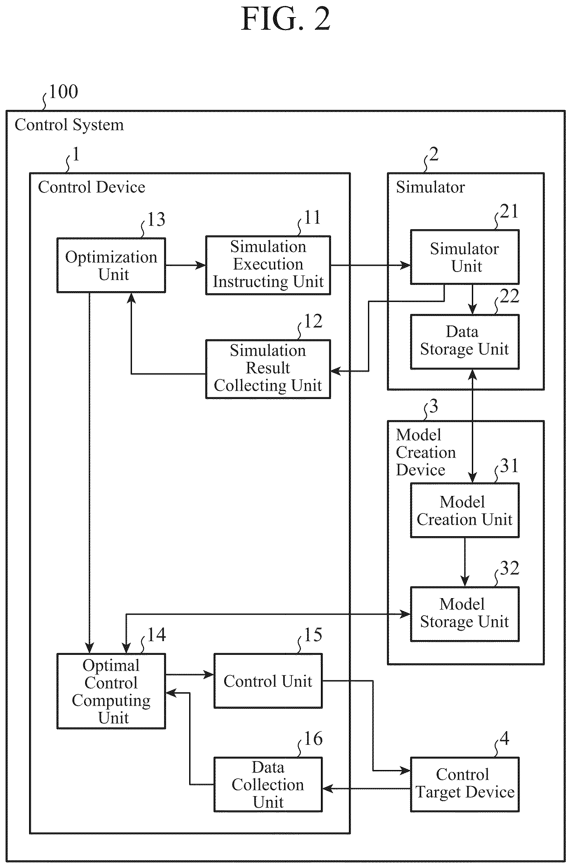

FIG. 2 is a diagram illustrating an exemplary configuration of a control system 100 including a control device 1 according to a first embodiment.

In the following first embodiment, the control system 100 is assumed to be an air-conditioning system as described above with reference to FIG. 1 as an example. Note that the air-conditioning-related equipment in the air-conditioning system will be collectively referred to as a control target device 4. The air-conditioning-related equipment is controlled by the control device 1.

In addition, in the following first embodiment, a manipulated variable will be referred to as a fan air volume, and a controlled variable will be referred to as a room temperature as an example.

In the following first embodiment, the control device 1 controls the fan air volume in such a manner that the room temperature reaches a target value at target time as an example. More specifically, the control device 1 calculates the fan air volume in such a manner that the room temperature reaches the target value at the target time, and performs control to cause a fan in an AHU to have the calculated fan air volume. Note that illustration of a room is omitted in FIG. 2.

The target time and the target value to be reached at the target time are determined in advance by an administrator or the like. In the first embodiment, the target value to be reached at the target time will also be referred to as a "final target value".

As illustrated in FIG. 2, the control system 100 includes, for example, the control device 1, a simulator 2, a model creation device 3, and the control target device 4.

Note that this is merely an example. For example, the model creation device 3 may be included in a system or the like other than the control system 100, and the control system 100 may not include the model creation device 3.

The control device 1 calculates a manipulated variable (fan air volume in this case) in the control target device 4 in such a manner that a certain measured value (i.e., controlled variable, which is room temperature in this case) measured in the control system 100 reaches the target value at the target time, and controls the control target device 4 to have the calculated manipulated variable.

The control device 1 is assumed to be mounted on, for example, a server (not illustrated).

The control device 1 includes a simulation execution instructing unit 11, a simulation result collecting unit 12, an optimization unit 13, an optimal control computing unit 14, a control unit 15, and a data collection unit 16.

The control device 1 causes the simulator 2 to execute simulation, and calculates, by optimization calculation, a target value (which will be referred to as "step target value" hereinafter) of the controlled variable (room temperature in this case) at stepwise time (which will be referred to as "step time" hereinafter) up to the target time, startup time of the control target device 4, and a setting value (e.g., temperature of water supply, etc.) on the basis of a result of the simulation.

In the first embodiment, the processing of causing the simulator 2 to execute the simulation and calculating the step target value of the controlled variable at the step time up to the target time, the startup time of the control target device 4, and the setting value by the optimization calculation, which is performed by the control device 1, will be referred to as "pre-optimization processing".

Furthermore, the control device 1 activates the control target device 4 with the setting value (e.g., temperature of water supply, etc.) calculated by performing the "pre-optimization processing" at the startup time of the control target device 4 calculated by performing the "pre-optimization processing". The control device 1 calculates a manipulated variable (fan air volume in this case) while receiving feedback from the control target device 4, more specifically, collecting data (which will be refer to as "sensor data" hereinafter) related to the controlled variable (room temperature in this case) measured after the startup of the control target device 4 from a sensor (not illustrated), in such a manner that the controlled variable follows the step target value calculated by performing the "pre-optimization processing". Then, the control device 1 controls, with the calculated manipulated variable, the control target device 4 that performs control with the calculated manipulated variable. Here, the control device 1 controls the fan in the AHU to have the calculated fan air volume.

The control device 1 calculates the manipulated variable using the modern control.

In the first embodiment, the processing of activating the control target device 4 on the basis of the setting value and the startup time of the control target device 4 calculated by performing the "pre-optimization processing", calculating the manipulated variable to follow the step target value of the controlled variable at the step time up to the target time calculated by performing the "pre-optimization processing" while receiving feedback from the control target device 4, and controlling the control target device 4 with the calculated manipulated variable, which is performed by the control device 1, will be referred to as "modern control processing".

In the "pre-optimization processing", the simulation execution instructing unit 11, the simulation result collecting unit 12, and the optimization unit 13 function.

In the "modern control processing", the optimal control computing unit 14, the control unit 15, and the data collection unit 16 function.

Hereinafter, an exemplary configuration of the control device 1 will be described while describing the "pre-optimization processing" and the "modern control processing" in detail.

The simulation execution instructing unit 11 inputs operating condition parameters to the simulator 2 to execute simulation.

The operating condition parameters input to the simulator 2 by the simulation execution instructing unit 11 include the startup time of the control target device 4, the step target value of the controlled variable (room temperature in this case) at the step time up to the target time, and the setting value of the control target device 4.

Here, the simulator 2 will be described.

The simulator 2 is a simulator using a common simulation technique.

The simulator 2 includes a simulator unit 21 and a data storage unit 22.

The simulator unit 21 simulatively reproduces operation or behavior of the control target device 4 on the basis of the read operating condition parameters, and performs simulation of a change in indoor environment, energy consumption of the control target device 4, or the like.

In the first embodiment, the simulator unit 21 performs the simulation by proportional-integral-derivative control (PID control), which is a known control technique. By performing the simulation based on the PID control, the simulator unit 21, more specifically, the control device 1 that causes the simulator unit 21 to execute the simulation, can avoid the necessity of collecting data in advance for executing the simulation.

Note that the operating condition parameters read by the simulator unit 21 are the operating condition parameters input by the simulation execution instructing unit 11.

Upon execution of the simulation, the simulator unit 21 calculates an error between the target value of the room temperature and the current room temperature in the simulation environment and power consumption consumed by the control target device 4.

The simulator unit 21 outputs data indicating the calculated error and power consumption (which will be referred to as "simulation result" hereinafter) to the control device 1.

In addition, the simulator unit 21 stores, in the data storage unit 22, various types of data collected as a result of performing the simulation as simulation data. The simulation data includes operation data (data indicating operation conditions, such as manipulated variable of the control target device 4), sensor data (measured values measured by various sensors, such as water temperature, valve opening degree, power consumption, room temperature, and fan air volume), the simulation result calculated by the simulator unit 21, and the operating condition parameters read by the simulator unit 21.

Note that, while the simulator 2 includes the data storage unit 22 here, this is merely an example. The data storage unit 22 may be provided outside the simulator 2 in a place that may be referred to by the simulator 2 and the model creation device 3.

The description returns to the control device 1.

The simulation result collecting unit 12 collects simulation results from the simulator unit 21.

The optimization unit 13 calculates, using a known optimization algorithm, optimal startup time of the control target device 4, an optimal step target value of the controlled variable (room temperature in this case) at the optimal step time up to the target time, and an optimal setting value of the control target device 4 on the basis of the simulation results collected by the simulation result collecting unit 12. The known optimization algorithm is an algorithm such as the genetic algorithm, the Bayesian optimization, or the like.

The optimization unit 13 selects, for example, a combination of the startup time of the control target device 4, the step target value of the controlled variable at the step time up to the target time, and the setting value of the control target device 4, which minimizes the power consumption, thereby calculating the optimal startup time of the control target device 4, the optimal step target value of the controlled variable at the optimal step time up to the target time, and the optimal setting value of the control target device 4.

Until an optimal solution is found, the optimization unit 13 changes the operating condition parameters, inputs the changed operating condition parameters to the simulator 2 via the simulation execution instructing unit 11, collects the simulation results via the simulation result collecting unit 12, and repeats the optimization calculation, thereby searching for the optimal solution.

Note that the optimization unit 13 only needs to appropriately set a startup time of the control target device 4, a set of step time and a step target value at the step time, and a setting value of the control target device 4 for the operating condition parameter when an instruction, for simulation execution is first given to the simulator unit 21. For example, the optimization unit 13 may set initial values for the startup time of the control target device 4, the set of the step time and the step target value, and the setting value of the control target device 4 on the assumption that the initial values are set in advance, or the optimization unit 13 may calculate the startup time of the control target device 4, the set of the step time and the step target value, and the setting value of the control target device 4 in accordance with setting conditions on the assumption that the setting conditions are defined in advance.

The functions of the simulation execution instructing unit 11 and the simulation result collecting unit 12 may be included in the optimization unit 13. In this case, the control device 1 can be configured not to include the simulation execution instructing unit 11 and the simulation result collecting unit 12.

When the optimal solution is found, the optimization unit 13 outputs, to the optimal control computing unit 14, data (which will be referred to as "control data" hereinafter) including the optimal startup time of the control target device 4, the optimal step target value of the controlled variable at the optimal step time up to the target time, and the optimal setting value of the control target device 4.

For example, the optimization unit 13 calculates the startup time of the control target device 4, the step target value of the controlled variable at the step time up to the target time, and the setting value of the control target device 4 as follows. Note that, as an example, the setting value will be referred to as an opening degree of a bypass valve and a temperature of water supply in the following descriptions.

{Startup time} = {6:50}
{Setting value} = [{Opening degree of bypass valve, 50%}, {Temperature of water supply, 40°C}]
{Time, Target value} = [{7:00, 22°C}, {7:15, 23°C}]

In this manner, the optimization unit 13 calculates the step target value of the controlled variable at the step time up to the target time in a set in which the step time and the step target value are associated with each other. The optimization unit 13 can calculate a plurality of sets of the step time and the step target value. The optimization unit 13 only needs to calculate one or more sets of the step time and the step target value.

The optimal control computing unit 14 activates the control target device 4 with the optimal setting value calculated by the optimization unit 13 at the optimal startup time calculated by the optimization unit 13 on the basis of the control data output from the optimization unit 13. Note that the control target device 4 activated by the optimal control computing unit 14 here is an actual device.

When the optimal control computing unit 14 activates the control target device 4 and the control target device 4 starts up, the data collection unit 16 collects the sensor data related to the controlled variable (room temperature in this case). The data collection unit 16 collects the sensor data at a preset cycle during the operation of the control target device 4.

The optimal control computing unit 14 calculates, using a known modern control algorithm, a manipulated variable (fan air volume in this case) to follow the optimal step target value at the optimal step time calculated by the optimization unit 13 on the basis of the sensor data collected by the data collection unit 16. The known modern control algorithm is an algorithm such as the LQR. The optimal control computing unit 14 calculates the manipulated variable at a preset cycle.

The optimal control computing unit 14 calculates the manipulated variable using a model (which will be referred to as "system identified model" hereinafter) in which a relationship between the manipulated variable and the power consumption and a relationship between the manipulated variable and the controlled variable are modeled.

While the modern control is a technique capable of performing efficient control in consideration of the energy consumption, it needs system identification of the power consumption. That is, the system identified model needs to be prepared.

The system identified model is created by the model creation device 3 before the control device 1 executes the "modern control processing".

Details of the model creation device 3 will be described later.

The optimal control computing unit 14 determines, on the basis of the sensor data collected by the data collection unit 16, which step target value among the step target values set in the control data is to be followed to follow the step target value corresponding to the current time. The optimal control computing unit 14 calculates a manipulated variable to follow the step target value determined to be followed using the system identified model. The optimal control computing unit 14 can determine the step target value to follow by comparing the current time with the step time associated with the step target value in the control data.

The optimal control computing unit 14 calculates the manipulated variable to follow the optimal step target value while receiving feedback from the control target device 4.

Note that the function of the data collection unit 16 may be included in the optimal control computing unit 14. In this case, the control device 1 may be configured not to include the data collection unit 16.

The control unit 15 operates, with the manipulated variable (fan air volume in this case) calculated by the optimal control computing unit 14, the control target device 4 (fan of the AHU in this case) that performs control with the manipulated variable.

Here, a concept of the manipulated variable that follows the step target value of the room temperature at the step time calculated by the optimization calculation in the "pre-optimization processing" and the step target value calculated by the optimization calculation of the modern control in the "modern control processing" in the control device 1 will be described with reference to the drawings.

FIG. 3 is a diagram for explaining a concept of the manipulated variable that follows the step target value of the room temperature at the step time calculated by the optimization calculation in the "pre-optimization processing" and the step target value calculated by the optimization calculation of the modern control in the "modern control processing" in the control device 1 according to the first embodiment.

FIG. 3A is a diagram for explaining a concept of an example of the step target value of the room temperature at the step time calculated in the "pre-optimization processing", and FIG. 3B is a diagram for explaining a concept of an example of the manipulated variable that follows the step target value calculated in the "modern control processing".

In FIG. 3, it is assumed that the target time is determined as "7:30" and the final target value is determined as "24°C" in advance. In addition, it is assumed that the control device 1 calculates the manipulated variable every minute.

For example, it is assumed that, in the control device 1, the optimization unit 13 calculates two optimal sets of the step time and the step target value, the two sets including a set of the step time "7:00" and the step target value "22 °C" and a set of the step time "7:15" and the step target value "23 °C" with the optimal startup time "6:50" of the control target device 4 (see FIG. 3A).

In this case, the optimal control computing unit 14 activates the control target device 4 at "6:50", calculates the manipulated variable, which is the fan air volume here, to follow the step target value "22°C" every minute from "6:50" to "7:00", calculates the fan air volume to follow the step target value "23°C" every minute from "7:00" to "7:15", and calculates the fan air volume to follow the final target value "24°C" every minute from "7:15" to "7:30" (see FIG. 3B).

In this manner, in the control device 1, the optimization unit 13 calculates a set of the startup time of the control target device 4 and the step target value at the optimal step time until the controlled variable reaches the final target value at the target time using the optimization algorithm.

Then, the optimal control computing unit 14 calculates a manipulated variable using the modern control algorithm in such a manner that, in each step up to the individual step times calculated by the optimization unit 13, the controlled variable reaches the corresponding step target value and the optimal energy (small power consumption) is obtained.

As a result, the control device 1 can achieve energy-saving control including the startup time. That is, the control device 1 calculates the manipulated variable in a stepwise manner following the step target value set in a stepwise manner up to the final target value, whereby an excessive manipulated variable at the startup of the control target device 4 can be avoided and the controlled variable can be avoided from reaching the final target value too early. As a result, the control device 1 can avoid energy loss due to the controlled variable reaching the final target value earlier.

The model creation device 3 creates a system identified model to be used by the optimal control computing unit 14 of the control device 1 in the "modern control processing".

The model creation device 3 is assumed to be mounted on, for example, a server (not illustrated).

The model creation device 3 includes a model creation unit 31 and a model storage unit 32.

The model creation unit 31 creates a system identified model using simulation data, which is stored in the data storage unit 22 and is output when the simulator unit 21 executes simulation in the "pre-optimization processing".

The model creation unit 31 stores the created system identified model in the model storage unit 32.

Note that, while the model creation device 3 includes the model storage unit 32 here, this is merely an example. The model storage unit 32 may be provided outside the model creation device 3 in a place that can be referred to by the model creation device 3 and the control device 1.

In the first embodiment, the processing of creating the system identified model using the simulation data output when the "pre-optimization processing" is executed by the control device 1, which is performed by the model creation device 3, will be referred to as "system identification processing".

The system identified model created by the model creation unit 31 is, for example, the following model.

$$\dot{x}(t) = Ax(t) + Bu(t)$$

$$y(t) = Cx(t)$$

x: State variable

y: Output (Controlled variable)
u: Input (Manipulated variable)

Here, the stare variable is an opening degree of a bypass valve, a temperature of water supply, power consumption, or the like. The output is a room temperature. The input is a fan air volume.

As described above, in the control device 1, the optimization unit 13 causes the simulator unit 21 of the simulator 2 to execute simulation in the process of optimization calculation. The simulator unit 21 performs PID control. Thus, various data in which the manipulated variable is changed in the process of the optimization calculation are output as simulation data, and are stored in the data storage unit 22.

The model creation unit 31 can shorten the data collection period for creating the system identified model by creating the system identified model using the simulation data.

The control device 1 can shorten the data collection period needed for the modern control by using the simulation data obtained in the optimization process for the modern control.

Operation of the control system 100 according to the first embodiment will be described.

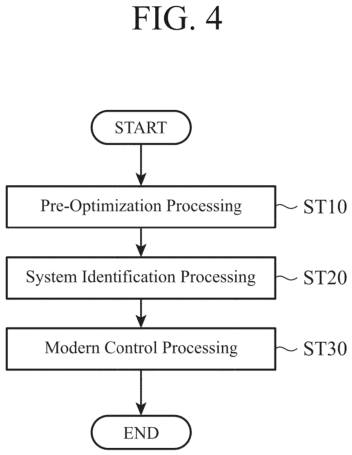

FIG. 4 is a flowchart for explaining the operation of the control system 100 according to the first embodiment.

In FIG. 4, processing of step ST10 and processing of step ST30 are processing to be performed by the control device 1, and processing of step ST20 is processing to be performed by the model creation device 3.

The control system 100 starts the operation as illustrated in the flowchart of FIG. 4 when, for example, the control device 1 receives an instruction to perform control in such a manner that the controlled variable reaches the target value (final target value) by the target time. For example, the administrator or the like inputs an instruction for performing the control from a management terminal such as a personal computer (PC). At this time, the administrator or the like may also input the target time and the final target value. Note that the management terminal is connected to the control system 100 via a network.

For example, the control system 100 performs the processing of step ST10 and the processing of step ST20 once after the start of the operation. The control system 100 repeats the processing of step ST30 until, for example, the control device 1 receives an instruction to end the control. For example, the administrator or the like inputs the instruction to end the control from the management terminal.

In the flowchart of FIG. 4, for convenience, the process of step ST10 to step ST30 is handled as a series flow.

The control device 1 performs the "pre-optimization processing" (step ST10).

Specifically, the control device 1 causes the simulator 2 to execute simulation, and calculates a step target value of the controlled variable (room temperature in this case) at the step time up to the target time, startup time of the control target device 4, and a setting value (e.g., temperature of water supply, etc.) by optimization calculation.

The model creation device 3 performs the "system identification processing" (step ST20).

Specifically, the model creation device 3 creates a system identified model using the simulation data output when the control device 1 executes the "pre-optimization processing" in step ST10 and the simulator unit 21 executes the simulation. Then, the model creation device 3 stores the created system identified model in the model storage unit 32.

The control device 1 performs the "modern control processing" (step ST30).

Specifically, the control device 1 activates the control target device 4 on the basis of the setting value and the startup time of the control target device 4 calculated by performing the "pre-optimization processing" in step ST10, calculates the manipulated variable (fan air volume in this case) to follow the step target value of the controlled variable at the step time up to the target time calculated by performing the "pre-optimization processing" while receiving feedback from the control target device 4, and controls the control target device 4 (fan of the AHU in this case) with the calculated manipulated variable.

In this manner, the control system 100 calculates, by the optimization calculation, the control data including the stepwise target value (step target value) until the controlled variable reaches the target value (final target value), more specifically, the startup time of the control target device 4, the setting value, and the step target value at the step time, on the basis of the simulation result obtained by causing the simulator 2 to execute the simulation. Then, the control system 100 activates the control target device 4 at the startup time and with the setting value calculated by the optimization calculation, calculates the manipulated variable by the technique of the modern control, and controls the control target device 4 in such a manner that the controlled variable follows the step target value.

By calculating the step target value using the optimization technique, the control system 100 can perform control in which the controlled variable reaches the target value (final target value) by the target time, and can avoid energy loss due to the controlled variable reaching the target value (final target value) earlier than expected. Furthermore, the control system 100 can perform optimization at the startup of the control target device 4 including the setting value and the startup time of the control target device 4, which has been difficult only by the modern control.

In the modern control, when a hyperparameter (e.g., weight matrix of an evaluation function in the modern control) is inappropriate, overshoot or hunting may occur. On the other hand, according to the control system 100, the manipulated variable is calculated to reach the target value (step target value) stepwise, whereby the possibility of occurrence of the overshoot or hunting can be reduced.

In addition, as described above, while the modern control is a technique capable of performing efficient control in consideration of the energy consumption, it needs system identification of the power consumption. However, in practice, it may be difficult to perform accurate system identification in a case of a complex system involving multiple devices. For example, the air-conditioning system can be said to be a complex system involving multiple devices.

On the other hand, in the control system 100, a set of the target time (step time) and the target value (step target value) that achieves energy saving to some extent is calculated by the control device 1 by the optimization calculation that does not need modeling by the system identification. Then, the control system 100 calculates the manipulated variable to follow the step target value. Thus, even when it is difficult to perform accurate system identification, the control system 100 may achieve energy-saving control.

Furthermore, the control system 100, more specifically, the model creation device 3 in the control system 100, creates the system identified model to be used to calculate the manipulated variable with reduced power consumption in the modern control using the simulation data obtained in the optimization process in the control device 1. As a result, the control system 100 can utilize the data (simulation data) obtained in the optimization process for the modern control. The control system 100 can contribute to reduction in the data collection period required for the modern control, more specifically, required for creating the system identified model needed for the modern control.

Operation of the control device 1 according to the first embodiment will be described.

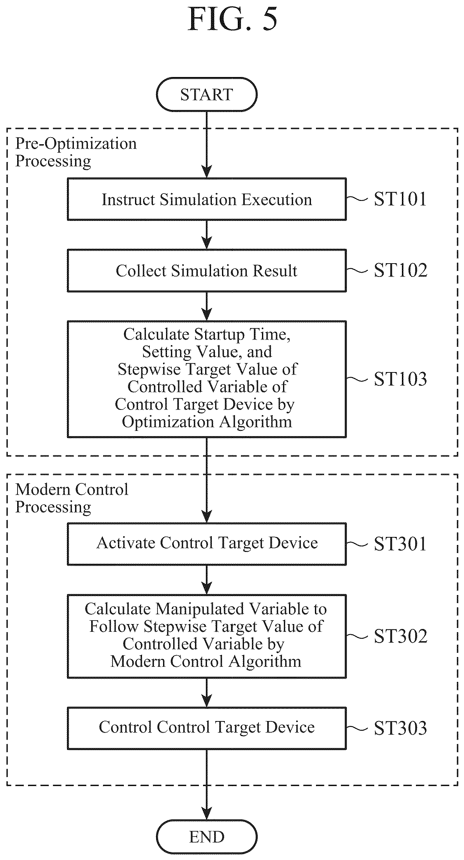

FIG. 5 is a flowchart for explaining the operation of the control device 1 according to the first embodiment.

The control device 1 starts the operation as illustrated in the flowchart of FIG. 5 when, for example, it receives an instruction to perform control in such a manner that the controlled variable reaches the target value (final target value) by the target time.

For example, the control device 1 performs a process of step ST101 to step ST103 once after the start of the operation. The control device 1 repeats a process of step ST302 to step ST303 until, for example, the control device 1 receives an instruction to end the control.

In the flowchart of FIG. 5, for convenience, the process of step ST101 to step ST303 is handled as a series flow.

In the process illustrated in the flowchart of FIG. 5, the operation of step ST101 to step ST103 is operation to be executed in the "pre-optimization processing", and the operation of step ST301 to step ST303 is operation to be executed in the "modern control processing".

The simulation execution instructing unit 11 inputs operating condition parameters to the simulator 2 to execute simulation (step ST101).

In the simulator 2, the simulator unit 21 simulatively reproduces the operation or behavior of the control target device 4 on the basis of the read operating condition parameters by the PID control, and performs simulation of a change in indoor environment, energy consumption of the control target device 4, or the like.

The simulator unit 21 outputs a simulation result to the control device 1.

In addition, the simulator unit 21 stores the simulation data in the data storage unit 22.

The simulation result collecting unit 12 collects simulation results from the simulator unit 21 (step ST102).

The optimization unit 13 calculates, using a known optimization algorithm, optimal startup time of the control target device 4, an optimal step target value of the controlled variable (room temperature in this case) at the optimal step time up to the target time, and an optimal setting value of the control target device 4 on the basis of the simulation results collected by the simulation result collecting unit 12 in step ST102 (step ST103).

When an optimal solution is found, the optimization unit 13 outputs the control data to the optimal control computing unit 14.

Note that, until the optimal solution is found, the optimization unit 13 changes the operating condition parameters, inputs the changed operating condition parameters to the simulator 2 via the simulation execution instructing unit 11, collects the simulation results via the simulation result collecting unit 12, and repeats the optimization calculation, thereby searching for the optimal solution. That is, the control device 1 repeats the process of step ST101 to step ST103 while changing the operating condition parameters until the optimization unit 13 finds the optimal solution.

The optimal control computing unit 14 activates the control target device 4 with the optimal setting value at the optimal startup time calculated by the optimization unit 13 in step ST103 (step ST301). Note that the control target device 4 activated by the optimal control computing unit 14 here is an actual device.

The data collection unit 16 collects sensor data related to the controlled variable (room temperature in this case).

Then, the optimal control computing unit 14 calculates, using the system identified model, a manipulated variable (fan air volume in this case) to follow the optimal step target value at the optimal step time calculated by the optimization unit 13 in step ST103 by a known modern control algorithm on the basis of the sensor data collected by the data collection unit 16 (step ST302).

The control unit 15 operates, with the manipulated variable calculated by the optimal control computing unit 14 in step ST302, the control target device 4 (fan of the AHU in this case) that performs control with the manipulated variable (step ST303).

The control device 1 repeats the process of step ST302 to step ST303, determines the step target value to be followed by comparing the current time with the step time associated with the step target value, and calculates the manipulated variable to follow the determined step target value.

As described above, the control device 1 calculates, by the optimization calculation, the control data including the step target value, which is the stepwise target value until the controlled variable reaches the target value (final target value), on the basis of simulation result indicating the error between the controlled variable and the target value (final target value) and the power consumption obtained by causing the simulator unit 21 that executes simulation to execute the simulation. After performing the optimization calculation, the control device 1 activates the control target device 4, collects the sensor data related to the controlled variable measured after the startup of the control target device 4, and calculates the manipulated variable of the control target device 4 on the basis of the collected sensor data in such a manner that the controlled variable follows the calculated step target value. Then, the control device 1 controls the control target device with the calculated manipulated variable.

By calculating the step target value using the optimization technique, the control device 1 can perform control in which the controlled variable reaches the target value (final target value) by the target time, and can avoid energy loss due to the controlled variable reaching the target value (final target value) earlier than expected. Furthermore, the control device 1 can perform optimization at the startup of the control target device 4 including the setting value and the startup time of the control target device 4, which has been difficult only by the modern control.

In the modern control, when a hyperparameter is inappropriate, overshoot or hunting may occur. On the other hand, according to the control device 1, the manipulated variable is calculated to reach the target value (step target value) stepwise, whereby the possibility of occurrence of the overshoot or hunting can be reduced.

In addition, as described above, while the modern control is a technique capable of performing efficient control in consideration of the energy consumption, it needs system identification of the power consumption. However, in practice, it may be difficult to perform accurate system identification in a case of a complex system involving multiple devices. For example, the air-conditioning system can be said to be a complex system involving multiple devices. On the other hand, the control device 1 calculates a set of the target time (step time) and the target value (step target value) that achieves energy saving to some extent by the optimization calculation that does not need modeling by the system identification. Then, the control device 1 calculates the manipulated variable to follow the step target value. Thus, the control device 1 thus the control system 100 can achieve energy-saving control even when it is difficult to perform accurate system identification.

Furthermore, the control device 1 uses the system identified model created using the simulation data obtained in the optimization process to calculate the manipulated variable with reduced power consumption in the modern control. The control device 1 can utilize the data (simulation data) obtained in the optimization process for the modern control. The control device 1 can contribute to reduction in the data collection period required for the modern control, more specifically, required for creating the system identified model needed for the modern control.

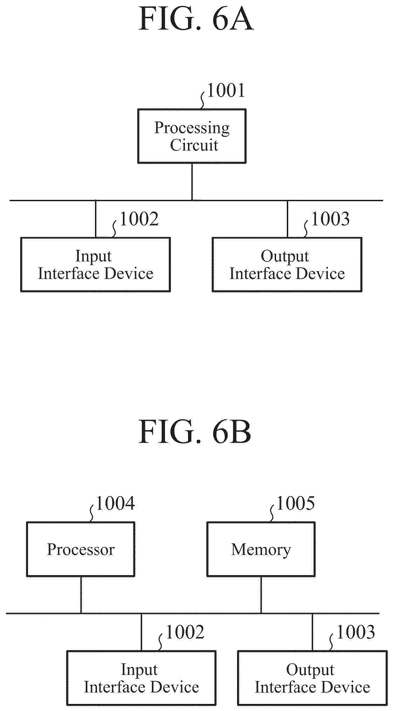

FIGs. 6A and 6B are diagrams illustrating an exemplary hardware configuration of the control device 1 according to the first embodiment.

In the first embodiment, the functions of the simulation execution instructing unit 11, the simulation result collecting unit 12, the optimization unit 13, the optimal control computing unit 14, the control unit 15, and the data collection unit 16 are implemented by a processing circuit 1001. That is, the control device 1 includes the processing circuit 1001 for calculating the manipulated variable by the technique of the modern control and controlling the control target device 4 in such a manner that the controlled variable follows the stepwise step target value calculated by the optimization technique.

The processing circuit 1001 may be dedicated hardware as illustrated in FIG. 6A, or may be a processor 1004 that executes a program stored in a memory as illustrated in FIG. 6B.

In a case where the processing circuit 1001 is dedicated hardware, the processing circuit 1001 may be, for example, a single circuit, a composite circuit, a programmed processor, a parallel programmed processor, an application specific integrated circuit (ASIC), a field-programmable gate array (FPGA), or a combination thereof.

In a case where the processing circuit is the processor 1004, the functions of the simulation execution instructing unit 11, the simulation result collecting unit 12, the optimization unit 13, the optimal control computing unit 14, the control unit 15, and the data collection unit 16 are implemented by software, firmware, or a combination of software and firmware. The software or firmware is described as a program, and is stored in a memory 1005. The processor 1004 reads and executes the program stored in the memory 1005, thereby implementing the functions of the simulation execution instructing unit 11, the simulation result collecting unit 12, the optimization unit 13, the optimal control computing unit 14, the control unit 15, and the data collection unit 16. That is, the control device 1 includes the memory 1005 for storing a program that results in execution of steps ST101 to ST303 in FIG. 5 described above when executed by the processor 1004. Furthermore, it may also be said that the program stored in the memory 1005 causes a computer to execute processing procedures or methods performed by the simulation execution instructing unit 11, the simulation result collecting unit 12, the optimization unit 13, the optimal control computing unit 14, the control unit 15, and the data collection unit 16. Here, examples of the memory 1005 include a nonvolatile or volatile semiconductor memory such as a random access memory (RAM), a read only memory (ROM), a flash memory, an erasable programmable read only memory (EPROM), or an electrically erasable programmable read only memory (EEPROM), a magnetic disk, a flexible disk, an optical disk, a compact disc, a mini disc, and a digital versatile disc (DVD).

Note that the functions of the simulation execution instructing unit 11, the simulation result collecting unit 12, the optimization unit 13, the optimal control computing unit 14, the control unit 15, and the data collection unit 16 may be partially implemented by dedicated hardware, and may be partially implemented by software or firmware. For example, the function of the control unit 15 can be implemented by the processing circuit 1001 as dedicated hardware, and the functions of the simulation execution instructing unit 11, the simulation result collecting unit 12, the optimization unit 13, the optimal control computing unit 14, and the data collection unit 16 can be implemented by the processor 1004 reading and executing programs stored in the memory 1005.

Furthermore, the control device 1 includes an input interface device 1002 and an output interface device 1003 that perform wired communication or wireless communication with devices such as the simulator 2, the model creation device 3, and the like.

An exemplary hardware configuration of the model creation device 3 according to the first embodiment is also a configuration as illustrated in FIGs. 6A and 6B.

In the first embodiment, the function of the model creation unit 31 is implemented by the processing circuit 1001. That is, the model creation device 3 includes the processing circuit 1001 for performing control to create the system identified model using the simulation data output when the "pre-optimization processing" is executed by the control device 1.

The processing circuit 1001 may be dedicated hardware as illustrated in FIG. 6A, or may be the processor 1004 that executes a program stored in a memory as illustrated in FIG. 6B.

In a case where the processing circuit is the processor 1004, the function of the model creation unit 31 is implemented by software, firmware, or a combination of software and firmware. The software or firmware is described as a program, and is stored in the memory 1005. The processor 1004 reads and executes the program stored in the memory 1005, thereby implementing the function of the model creation unit 31. That is, the model creation device 3 includes the memory 1005 for storing a program that results in execution of step ST20 in FIG. 4 described above when executed by the processor 1004. It may also be said that the program stored in the memory 1005 causes a computer to execute a processing procedure or method performed by the model creation unit 31.

The model storage unit 32 includes the memory 1005, a RAM, a ROM, or the like.

Furthermore, the model creation device 3 includes the input interface device 1002 and the output interface device 1003 that perform wired communication or wireless communication with devices such as the control device 1, the simulator 2, and the like.

Note that, in the first embodiment described above, the optimization unit 13 of the control device 1 may be allowed, in the optimization calculation, to select multi-objective optimization capable of selecting trade-off between comfort in which a measured value and a target value (final target value) match and energy saving or power consumption.

For example, a user can select the trade-off between the comfort, that is, the fact that the target value (final target value) has been reached at the target time, the energy saving, and the demand value, that is, the maximum power consumption by visualization of a Pareto frontier.

As a result, the control system 100 can operate as a system capable of setting a target value of the controlled variable by prioritizing the energy saving or the demand value at the expense of some comfort, that is, even when the target value (final target value) has not been precisely reached at the target time.

In addition, the control device 1 may operate as a device capable of setting a target value of the controlled variable by prioritizing the energy saving or the demand value at the expense of some comfort, that is, even when the target value (final target value) has not been precisely reached at the target time.

Furthermore, while the controlled variable is the room temperature and the manipulated variable is the fan air volume in the first embodiment, this is merely an example. For example, the controlled variable may be a charge air temperature of the AHU. Any measured value measured in the air-conditioning system may be a controlled variable. Furthermore, for example, the manipulated variable may be a setting value of the charge air temperature of the fan in the AHU, or may be the charge air temperature of the AHU. In the air-conditioning system, a value by which some target setting value (controlled variable) may be controlled by controlling that value may be a manipulated variable.

Furthermore, in the first embodiment described above, the control system 100 is assumed to be an air-conditioning system, more specifically, a chiller system. However, this is merely an example.

In the case where the control system 100 is an air-conditioning system, the air-conditioning system may be a variable refrigerant flow (VRF) system. The VRF system performs, for example, air-conditioning of a room in a building.

In the VRF system, air-conditioning-related equipment serving as the control target device 4 includes, for example, a compressor and an indoor unit. The indoor unit includes a fan, a heat exchanger, and the like.

The compressor compresses a refrigerant to a high pressure, and uses it as a fluid. The refrigerant is set from the compressor to the indoor unit, and in the indoor unit, the fan controls the flow of the refrigerant to blow air. The rotation of the fan heats or cools the air to adjust the temperature in the room.

For example, in the VRF system, the control device 1 can control the compressor in such a manner that the room temperature reaches the target value (final target value) at the target time with the room temperature serving as a controlled variable and the compressor frequency serving as a manipulated variable. The control device 1 executes simulation, and calculates optimal startup time of the control target device 4, an optimal setting value, and an optimal step target value of the room temperature at optimal step time by the optimization technique. Then, the control device 1 activates the control target device 4 at the optimal startup time and with the optimal setting value calculated by the optimization technique, calculates the compressor frequency by the technique of the modern control in such a manner that the room temperature follows the optimal step target value, and controls the control target device 4 (compressor in this case). Note that, in this case, the setting value is a fan air volume of the fan in the indoor unit, for example.

Furthermore, the control system 100 is not limited to the air-conditioning system, and may be a system other than the air-conditioning system.

For example, the control system 100 may be a plant system such as a manufacturing plant, a power plant, a petrochemical plant, a water treatment plant, or the like. For example, in a plant system, equipment or a device included in the plant system serves as the control target device 4, and the control device 1 can perform control to control a cutting speed in such a manner that a cutting amount reaches the target value (final target value) at the target time. For example, the control device 1 executes simulation, and calculates optimal startup time of the control target device 4, an optimal setting value, and an optimal step target value of the cutting amount at optimal step time by the optimization technique. Then, the control device 1 activates the control target device 4 at the optimal startup time and with the optimal setting value calculated by the optimization technique, calculates the cutting speed by the technique of the modern control in such a manner that the cutting amount follows the optimal step target value, and controls the control target device 4 (e.g., cutting machine in this case). Note that, in this case, the setting value is a feed speed, a cutting depth, or a cutting angle in the cutting machine, for example.

Furthermore, for example, the control system 100 may be a robot system including a transfer robot (e.g., drone). In the robot system, for example, equipment related to conveyance of cargo by the transfer robot including the transfer robot serves as the control target device 4, and the control device 1 can perform control in such a manner that a movement amount of the transfer robot reaches the target value (final target value) at the target time. For example, the control device 1 executes simulation, and calculates optimal startup time of the control target device 4, an optimal setting value, and an optimal step target value of the movement amount of the transfer robot at optimal step time by the optimization technique. Then, the control device 1 activates the control target device 4 at the optimal startup time and with the optimal setting value calculated by the optimization technique, calculates a movement speed of the transfer robot by the technique of the modern control in such a manner that the movement amount of the transfer robot follows the optimal step target value, and controls the control target device 4 (e.g., motor in this case). Note that, in this case, the setting value is a rotation speed of a propeller provided in the transfer robot or an amount of power supplied to the transfer robot, for example.

Furthermore, while the simulator 2 is a device separate from the control device 1 in the first embodiment described above, this is merely an example.

For example, the simulator 2 may be included in the control device 1.

Furthermore, while the model creation device 3 is a device separate from the control device 1 in the first embodiment described above, this is merely an example.

For example, the model creation device 3 may be included in the control device 1.

For example, both the simulator 2 and the model creation device 3 may be included in the control device 1.

Furthermore, while the control device 1 and the model creation device 3 are mounted on a server in the first embodiment described above, this is merely an example.

For example, the control device 1 and the model creation device 3 may be mounted on the control target device 4.

Furthermore, for example, in the control device 1, some of the simulation execution instructing unit 11, the simulation result collecting unit 12, the optimization unit 13, the optimal control computing unit 14, the control unit 15, and the data collection unit 16 may be included in the server, and the others may be included in the control target device 4.

Furthermore, in the control device 1, the optimization unit 13 calculates the optimal startup time of the control target device 4 and the optimal setting value of the control target device 4 using a known optimization algorithm in the first embodiment. However, this is merely an example, and the optimization unit 13 may calculate the optimal startup time of the control target device 4 and the optimal setting value of the control target device 4 by another method. For example, the optimization unit 13 may calculate the optimal startup time of the control target device 4 and the optimal setting value of the control target device 4 using reinforcement learning, which is one of known machine learning methods for modeling the relationship between the setting value and the control system and calculating the optimal setting value. Here, it should be noted that, as described above, the optimization calculation is recommended as a technique of calculating the optimal startup time of the control target device 4 and the optimal setting value of the control target device 4.

Furthermore, in the control device 1, the optimal control computing unit 14 calculates, using a known modern control algorithm, the manipulated variable to follow the optimal step target value at the optimal step time calculated by the optimization unit 13 on the basis of the sensor data collected by the data collection unit 16 in the first embodiment described above. However, this is merely an example, and the optimal control computing unit 14 may calculate the manipulated variable using, for example, another control algorithm. For example, the optimal control computing unit 14 may calculate the manipulated variable using a known classical control algorithm. Examples of the known classical control algorithm include an algorithm of the PID control.

Note that, while control may be performed to follow the target value according to the classical control algorithm, energy minimization may not be taken into consideration. Thus, for example, it is useful in terms of energy minimization to make the optimal control computing unit 14 calculate a stepwise target value that minimizes the energy by the optimization calculation and then perform the PID control to follow the target value.

As described above, according to the first embodiment, the control device 1 includes: the optimization unit 13 that calculates, by the optimization calculation, the control data including the step target value, which is the target value in a stepwise manner until the controlled variable reaches the target value, on the basis of the simulation result indicating an error between the controlled variable and the target value and the power consumption obtained by causing the simulator unit 21, which executes the simulation that simulatively reproduces operation or behavior of the control target device 4, to execute the simulation; the optimal control computing unit 14 that activates the control target device 4, collects the sensor data related to the controlled variable measured after the activation of the control target device 4, and calculates the manipulated variable of the control target device 4 on the basis of the collected sensor data in such a manner that the controlled variable follows the step target value calculated by the optimization unit 13; and the control unit 15 that controls the control target device 4 with the manipulated variable calculated by the optimal control computing unit 14.

Thus, the control device 1 can perform the target control at the target time, and can avoid the energy loss due to the controlled variable reaching the target value earlier than the target time.

By calculating the step target value using the optimization technique, the control device 1 can perform control in which the controlled variable reaches the target value by the target time, and can avoid the energy loss due to the controlled variable reaching the target value earlier than expected.

The control data includes the startup time of the control target device 4 and the setting value of the control target device 4, and the optimal control computing unit 14 activates the control target device at the startup time and with the setting value based on the control data.

The control device 1 is capable of performing optimization at the startup of the control target device 4 including the setting value and the startup time of the control target device 4, which has been difficult only by the modern control.

Furthermore, in the control device 1, the optimal control computing unit 14 calculates the manipulated variable using the system identified model in which the relationship between the manipulated variable and the power consumption and the relationship between the manipulated variable and the controlled variable are modeled, and the system identified model is created using the simulation data collected when the simulator unit 21 executes the simulation.

The control device 1 may utilize the data (simulation data) obtained in the optimization process for the modern control. The control device 1 may contribute to reduction in the data collection period required for the modern control, more specifically, required for creating the system identified model needed for the modern control.

Furthermore, according to the first embodiment, the control system 100 includes: the optimization unit 13 that calculates, by the optimization calculation, the control data including the step target value, which is the target value in a stepwise manner until the controlled variable reaches the target value, on the basis of the simulation result indicating an error between the controlled variable and the target value and the power consumption obtained by causing the simulator unit 21, which executes the simulation that simulatively reproduces operation or behavior of the control target device 4, to execute the simulation; the optimal control computing unit 14 that activates the control target device 4, collects the sensor data related to the controlled variable measured after the activation of the control target device 4, and calculates the manipulated variable of the control target device 4 on the basis of the collected sensor data in such a manner that the controlled variable follows the step target value calculated by the optimization unit 13; the control unit 15 that controls the control target device 4 with the manipulated variable calculated by the optimal control computing unit 14; and the control target device 4.

Thus, the control system 100 can perform the target control at the target time, and can avoid the energy loss due to the controlled variable reaching the target value earlier than the target time.

By calculating the step target value using the optimization technique, the control system 100 can perform control in which the controlled variable reaches the target value by the target time, and can avoid the energy loss due to the controlled variable reaching the target value earlier than expected.

The control data includes the startup time of the control target device 4 and the setting value of the control target device 4, and the optimal control computing unit 14 activates the control target device at the startup time and with the setting value based on the control data.

The control system 100 is capable of performing optimization at the startup of the control target device 4 including the setting value and the startup time of the control target device 4, which has been difficult only by the modern control.

Furthermore, in the control system 100, the control device 1 calculates the manipulated variable using the system identified model in which the relationship between the manipulated variable and the power consumption and the relationship between the manipulated variable and the controlled variable are modeled, and the system identified model is created using the simulation data collected when the simulator unit 21 executes the simulation.

The control system 100 can utilize the data (simulation data) obtained in the optimization process for the modern control. The control system 100 can contribute to reduction in the data collection period required for the modern control, more specifically, required for creating the system identified model needed for the modern control.

Note that any component of the embodiment may be modified, or any component of the embodiment may be omitted.

INDUSTRIAL APPLICABILITY

The control device according to the present disclosure can perform the target control at the target time, and can avoid the energy loss due to the controlled variable reaching the target value earlier than the target time.

REFERENCE SIGNS LIST

1: control device, 11: simulation execution instructing unit, 12: simulation result collecting unit, 13: optimization unit, 14: optimal control computing unit, 15: control unit, 16: data collection unit, 2: simulator, 21: simulator unit, 22: data storage unit, 3: model creation device, 31: model creation unit, 32: model storage unit, 4: control target device, 100: control system, 1001: processing circuit, 1002: input interface device, 1003: output interface device, 1004: processor, 1005: memory

**Claims**

1. A control device to control a control target device to be controlled in such a manner that a controlled variable, which is a measured value aiming at a target value, reaches the target value at target time, the control device comprising:

    an optimization unit to calculate, by optimization calculation, control data including a step target value, which is the target value in a stepwise manner until the controlled variable reaches the target value, on a basis of a simulation result indicating an error between the controlled variable and the target value and power consumption obtained by causing a simulator unit, which executes simulation that simulatively reproduces operation or behavior of the control target device, to execute the simulation;
    an optimal control computing unit to activate the control target device, collect sensor data related to the controlled variable measured after the activation of the control target device, and calculate a manipulated variable of the control target device on a basis of the collected sensor data in such a manner that the controlled variable follows the step target value calculated by the optimization unit; and
    a control unit to control the control target device with the manipulated variable calculated by the optimal control computing unit.

2. The control device according to claim 1, wherein

    the control data includes startup time of the control target device and a setting value of the control target device, and
    the optimal control computing unit activates the control target device at the startup time and with the setting value based on the control data.

3. The control device according to claim 1 or 2, wherein the optimal control computing unit calculates the manipulated variable using modern control.

4. The control device according to any one of claims 1 to 3, wherein

    the optimal control computing unit calculates the manipulated variable using a system identified model in which a relationship between the manipulated variable and the power consumption and a relationship between the manipulated variable and the controlled variable are modeled, and
    the system identified model is created using simulation data collected when the simulator unit executes the simulation.

**5.** The control device according to any one of claims 1 to 4, wherein
the optimization unit is capable of selecting, in the optimization calculation, multi-objective optimization capable of selecting trade-off of comfort in which the measured value and the target value match, energy saving, or the power consumption.

**6.** The control device according to any one of claims 1 to 5, further comprising:
the simulator unit to execute the simulation and output the simulation result.

**7.** A control system comprising:

the control device according to any one of claims 1 to 6; and
the control target device.

**8.** A control system comprising:

the control device according to any one of claims 1 to 5;
the simulator unit to execute the simulation and output the simulation result; and
the control target device.

**9.** The control system according to claim 7 or 8, wherein the control system includes an air-conditioning system.

**10.** A control method to control a control target device to be controlled in such a manner that a controlled variable, which is a measured value aiming at a target value, reaches the target value at target time, the control method comprising:

a step in which an optimization unit calculates, by optimization calculation, control data including a step target value, which is the target value in a stepwise manner until the controlled variable reaches the target value, on a basis of a simulation result indicating an error between the controlled variable and the target value and power consumption obtained by causing a simulator unit, which executes simulation that simulatively reproduces operation or behavior of the control target device, to execute the simulation;
a step in which an optimal control computing unit activates the control target device, collects sensor data related to the controlled variable measured after the activation of the control target device, and calculates a manipulated variable of the control target device on a basis of the collected sensor data in such a manner that the controlled variable follows the step target value calculated by the optimization unit; and

a step in which a control unit controls the control target device with the manipulated variable calculated by the optimal control computing unit.

## FIG. 1A  Control Engineering Approach (LQR, Etc.)

Energy Loss for Early Reaching

Initial Manipulated Variable Tends to Be Larger to Quickly Reach Target Value

Startup Time

Target Time

Time

Target Value of Controlled Variable (Set Temperature)

Controlled Variable (Room Temperature)

Manipulated Variable (Fan Air Volume)

## FIG. 1B  Optimization Approach (Genetic Algorithm, Bayesian Optimization, Etc.)

Difficult to Perform Precise Control (Not Optimal as Control)

Startup Time (Optimized)

Target Time

Time

Target Value of Controlled Variable (Set Temperature)

Controlled Variable (Room Temperature)

Manipulated Variable (Fan Air Volume)

EP 4 730 056 A1

# FIG. 2

FIG. 3A

Room Temperature

Determine Target Value of Room Temperature at Stepwise Time by Optimization

Final Target Value 24°C

Step Target Value (2) 23°C

Step Target Value (1) 22°C

Time

Startup Time 6:50

Step Target Time (1) 7:00

Step Target Time (2) 7:15

Target Time 7:30

FIG. 3B

Room Temperature

Determine Manipulated Variable at Each Time by Modern Control Theory
Manipulated Variable per Minute

Final Target Value 24°C

Step Target Value (2) 23°C

Step Target Value (1) 22°C

Time

Startup Time 6:50

Step Target Time (1) 7:00

Step Target Time (2) 7:15

Target Time 7:30

—————— Target Value of Controlled Variable (Set Temperature)

—·—·—· Controlled Variable (Room Temperature)

—■—■— Manipulated Variable (Fan Air Volume)

# FIG. 4

```
        ┌──────────┐
        │  START   │
        └──────────┘
              │
              ▼
┌──────────────────────────────┐
│  Pre-Optimization Processing  │ ∽ ST10
└──────────────────────────────┘
              │
              ▼
┌──────────────────────────────┐
│ System Identification Processing │ ∽ ST20
└──────────────────────────────┘
              │
              ▼
┌──────────────────────────────┐
│  Modern Control Processing    │ ∽ ST30
└──────────────────────────────┘
              │
              ▼
        ┌──────────┐
        │   END    │
        └──────────┘
```

# FIG. 5

START

**Pre-Optimization Processing**

Instruct Simulation Execution — ST101

Collect Simulation Result — ST102

Calculate Startup Time,
Setting Value, and
Stepwise Target Value of
Controlled Variable of
Control Target Device by
Optimization Algorithm — ST103

**Modern Control Processing**

Activate Control Target Device — ST301

Calculate Manipulated Variable to
Follow Stepwise Target Value of
Controlled Variable by
Modern Control Algorithm — ST302

Control Control Target Device — ST303

END

# FIG. 6A

```
                    1001
            ┌──────────────┐
            │  Processing  │
            │   Circuit    │
            └──────────────┘
                    │
    ────────────────┴──────────────────
        │                      │
      1002                   1003
  ┌──────────────┐    ┌──────────────┐
  │    Input     │    │   Output     │
  │Interface Device│  │Interface Device│
  └──────────────┘    └──────────────┘
```

# FIG. 6B

```
      1004                  1005
  ┌──────────────┐    ┌──────────────┐
  │  Processor   │    │   Memory     │
  └──────────────┘    └──────────────┘
        │                    │
    ────┴────────────────────┴──────────
            │                    │
          1002                 1003
    ┌──────────────┐    ┌──────────────┐
    │    Input     │    │   Output     │
    │Interface Device│  │Interface Device│
    └──────────────┘    └──────────────┘
```

## INTERNATIONAL SEARCH REPORT

| International application No. |
| --- |
| **PCT/JP2023/026173** |

| A. | CLASSIFICATION OF SUBJECT MATTER |
| --- | --- |

**G05B 13/04**(2006.01)i
FI:    G05B13/04

According to International Patent Classification (IPC) or to both national classification and IPC

| B. | FIELDS SEARCHED |
| --- | --- |

Minimum documentation searched (classification system followed by classification symbols)

G05B13/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2012-225609 A (PANASONIC CORPORATION) 15 November 2012 (2012-11-15) paragraphs [0015], [0030]-[0037] | 1-10 |
| A | JP 2004-21309 A (DENSO CORPORATION) 22 January 2004 (2004-01-22) paragraphs [0021]-[0022], [0028]-[0030] | 1-10 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 August 2023** | **05 September 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/026173**

| Patent document cited in search report | | | Publication date (day/month/year) | Patent family member(s) | | | Publication date (day/month/year) |
|---|---|---|---|---|---|---|---|
| JP | 2012-225609 | A | 15 November 2012 | WO | 2012/144625 | A1 | |
| JP | 2004-21309 | A | 22 January 2004 | (Family: none) | | | |

Form PCT/ISA/210 (patent family annex) (January 2015)

**EP 4 730 056 A1**

REFERENCES CITED IN THE DESCRIPTION

**Patent documents cited in the description**

- JP 2021089089 A